# EUROPEAN PATENT APPLICATION

(11) **EP 4 480 831 A1**
(43) Date of publication of application: **25.12.2024**
(21) Application number: 23756476.0
(22) Date of filing: 17.02.2023
(51) Int. Cl.: B64G 1/10, B64G 1/62, B64G 1/64, B64G 4/00

(54) **DEBRIS REMOVAL SYSTEM AND DEBRIS REMOVAL METHOD**

(30) Priority: 17.02.2022 JP 2022022604; 17.02.2022 JP 2022022598
(71) Applicant: Astroscale Japan Inc., Tokyo, 130-0013 (JP)
(72) Inventor: IWAI, Takashi, Tokyo 130-0013 (JP); NISHIDA, Shin-Ichiro, Tokyo 130-0013 (JP); LINDSAY, Michael, Tokyo 130-0013 (JP); FUJITA, Sho, Tokyo 130-0013 (JP)
(74) Representative: Plasseraud IP
(86) International application number: PCT/JP2023/005773
(87) International publication number: WO 2023/157952

(57) **Abstract**

To provide a system capable of eliminating a complicated function or a high-precision control necessary when a service satellite approaches space debris or the like for removing the debris. A system 1, which removes a space debris C existing in an outer space, comprises: a first spacecraft S and a second spacecraft R configured to move in the outer space; and a cooperative interface M attached to a surface of the space debris C by the first spacecraft S. The second spacecraft R is configured to approach the space debris C using the cooperative interface M, capture the space debris C, and enter the atmosphere together with the space debris C or release the space debris C at a low altitude.

## Description

### Technical Field

The present invention relates to a debris removal system and a debris removal method.

### Background Art

In recent years, a technique related to a service satellite configured to provide a service of capturing space debris by approaching the space debris without an interface such as a marker, and entering the atmosphere together with the space debris to remove the space debris has been proposed (see, for example, Patent Document 1). The service satellite has a high-level sensing function and a control function of a relative position and attitude necessary for approaching or connecting to an object of which a shape, a thermooptical characteristic, and the like are unknown.

### Citation List

### Patent Document

Patent Document 1: Japanese Patent Application Laid-Open No. 2015-174647

### Summary of Invention

### Technical Problem

However, such a service satellite has the following problems. That is, there is a problem that the sensing function or the control function of the position and the attitude, which is necessary for approaching the space debris and removing the debris, is often complicated, and it is difficult to perform the sensing or the position and attitude control with high accuracy.

The present invention is made in view of such circumstances, and an object of the present invention is to provide a system capable of eliminating a complicated function or a high-precision control necessary when a service satellite approaches space debris or the like for removing the debris.

### Solution to Problem

In order to achieve the object, a first debris removal system according to the present invention is a system that removes space debris existing in an outer space, the debris removal system including first and second spacecrafts configured to move in the outer space, and a cooperative interface attached to a surface of the space debris by the first spacecraft, in which the second spacecraft is configured to approach the space debris using the cooperative interface, capture the space debris, and enter the atmosphere together with the space debris.

A second debris removal system according to the present invention is a system that removes space debris existing in an outer space, the debris removal system including first and second spacecrafts configured to move in the outer space, and a cooperative interface attached to a surface of the space debris by the first spacecraft, in which the second spacecraft is configured to approach the space debris using the cooperative interface, capture the space debris, and release the space debris at a low altitude.

In addition, a first debris removal method according to the present invention is a method of removing space debris existing in an outer space, the debris removal method including an attachment step of attaching a cooperative interface to a surface of the space debris by a first spacecraft configured to move in the outer space, a capture step of causing a second spacecraft to approach the space debris using the cooperative interface and capturing the space debris by the second spacecraft, and a re-entry step of causing the second spacecraft to enter the atmosphere together with the space debris.

A second debris removal method according to the present invention is a method of removing space debris existing in an outer space, the debris removal method including an attachment step of attaching a cooperative interface to a surface of the space debris by a first spacecraft configured to move in the outer space, a capture step of causing a second spacecraft to approach the space debris using the cooperative interface and capturing the space debris by the second spacecraft, and a release step of releasing the space debris captured in the capture step at a low altitude.

With the adoption of such a configuration and method, the cooperative interface is able to be attached to the surface of the space debris by the first spacecraft configured to move in the outer space. Therefore, the second spacecraft (for example, a service satellite) is able to easily approach the space debris using the cooperative interface, capture the space debris, and enter the atmosphere together with the space debris (or release the space debris at the low altitude), thereby realizing debris removal. Therefore, it is possible to eliminate a complicated function or a high-precision control necessary when the second spacecraft approaches the space debris or the like for removing the debris, and it is easy to perform the debris removal operation. As a result, it is possible to realize a reduction of the cost required for debris removal and to provide a debris removal service more safely. In addition, since various design margins necessary to ensure safety are able to be kept to a minimum, it is also possible to realize reduction of the cost required for debris removal.

In the debris removal system according to the present invention, it is possible to adopt a plate-like body having an optical marker configured to reflect light as the cooperative interface. In such a case, a surface of the plate-like body is able to have an adsorption force, the first spacecraft is able to have a grip portion that grips the plate-like body, and the surface of the plate-like body gripped by the grip portion is able to be pressed against the surface of the space debris so that the surface of the plate-like body is able to be adsorbed onto the surface of the space debris, and the plate-like body is able to be attached to the space debris. The surface of the plate-like body is able to have the adsorption force by using Adhesive Textile, Gecko, Velcro, and/or Coldwelding.

In addition, in the debris removal system according to the present invention, the first spacecraft is able to have a coating portion that applies an approach marker as the cooperative interface to the surface of the space debris.

In addition, in the debris removal system according to the present invention, it is possible to adopt the first spacecraft that has a robot arm and a grip mechanism provided at a distal end of the robot arm. In such a case, it is possible to adopt the grip mechanism that is configured to attach the cooperative interface, to grip the space debris, and to be separated from the robot arm together with the cooperative interface.

With the adoption of such a configuration, the cooperative interface is attached to the grip mechanism of the robot arm of the spacecraft configured to move in the outer space, the space debris is gripped by the grip mechanism, and the grip mechanism is separated from the robot arm together with the cooperative interface, such that the cooperative interface and the space debris is able to be integrated.

### Advantageous Effects of Invention

According to the present invention, it is possible to provide a system capable of eliminating a complicated function or a high-precision control necessary when a service satellite approaches the space debris or the like for debris removal.

### Brief Description of Drawings

Fig. 1 is a diagram showing an outline of a debris removal system according to a first embodiment of the present invention.
Fig. 2 is a diagram showing another application example (aspect in which a plurality of space debris is processed by a single spacecraft) of the debris removal system according to the first embodiment of the present invention.
Fig. 3 is a diagram showing an outline of a debris removal system according to a second embodiment of the present invention, in which (A) is a diagram showing a state in which space debris is gripped by a grip mechanism of a robot arm of a first spacecraft, and (B) is a diagram showing a state in which the grip mechanism of the first spacecraft is separated from the robot arm.

### Description of Embodiments

Hereinafter, each embodiment of the present invention will be described with reference to the drawings.

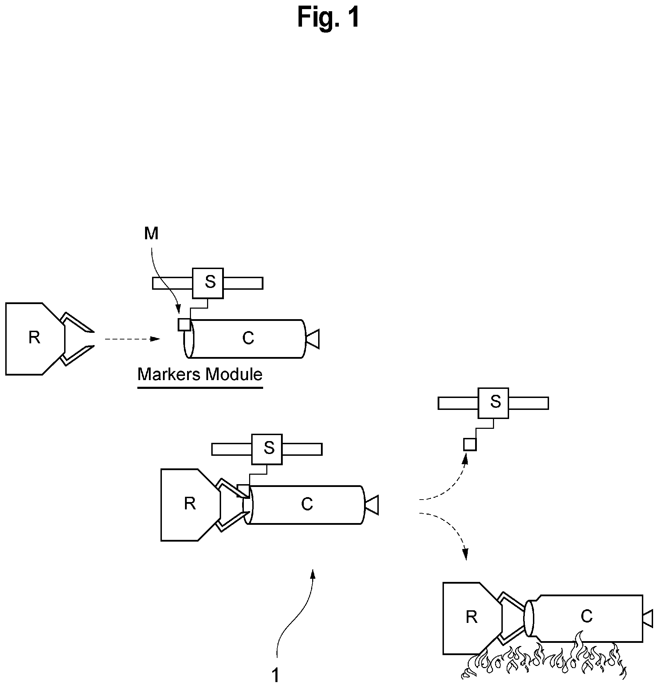

First, a configuration of a debris removal system (hereinafter, referred to as a "present system") 1 according to a first embodiment of the present invention will be described with reference to Fig. 1. The present system 1 is a system that removes a space debris C existing in an outer space, and includes a first spacecraft S and a second spacecraft R configured to move in the outer space, and a cooperative interface M attached to a surface of the space debris C by the first spacecraft S.

In the present embodiment, as the cooperative interface M, a plate-like body having an optical marker is adopted. The optical marker is attached to one surface of the plate-like body and is configured to reflect light. For example, the optical marker is able to include a retroreflective material in which an emission direction of light is able to be made to match with an incidence direction. In a case in which a heat insulating film is formed on the surface to which the optical marker is attached, an optical marker that reflects light in a predetermined wavelength range (for example, light in a near-ultraviolet range having a wavelength range of 300 to 400 nm) absorbed by the heat insulating film is also able to be adopted. In addition, the other surface of the plate-like body in the present embodiment has an adsorption force by using Adhesive Textile, Gecko, Velcro, and/or Coldwelding.

The first spacecraft S according to the present embodiment has a grip portion (robot arm or the like) that grips the plate-like body as the cooperative interface M. The plate-like body is gripped by the grip portion of the spacecraft S, and the surface of the plate-like body (surface having the adsorption force on a side opposite to the optical marker) is pressed against the surface of the space debris C, such that the surface of the plate-like body is able to be adsorbed onto the surface of the space debris C and the plate-like body is able to be attached to the space debris C.

The second spacecraft R in the present embodiment is a so-called service satellite, and is configured to approach the space debris C using the cooperative interface M, capture the space debris C, and enter the atmosphere together with the space debris C. In addition, instead of (or in addition to) the function of entering the atmosphere together with the space debris C, the second spacecraft R configured to transfer to an orbit at a low altitude (altitude significantly lower than the ISS altitude, for example, about 350 km) together with the space debris C and discharge (release) the space debris C at the low altitude is able to be adopted. The configuration of the second spacecraft R may adopt any configuration as long as the second spacecraft R is able to fulfill the above functions, and is not particularly limited.

A method of removing the space debris C using the present system 1 (debris removal method) includes a step (attachment step) of attaching the cooperative interface M to the surface of the space debris C by the first spacecraft S configured to move in the outer space, a step (capture step) of causing the second spacecraft R to approach the space debris C using the cooperative interface M and capturing the space debris C by the second spacecraft R, and a step (re-entry step) of causing the second spacecraft R to enter the atmosphere together with the space debris C. Instead of the re-entry step, a release step of releasing the space debris C captured in the capture step at the low altitude is able to also be adopted.

In the attachment step of the method according to the present embodiment, for example, as already described, the plate-like body as the cooperative interface M is gripped by the grip portion of the spacecraft S, and the surface of the plate-like body (surface having the adsorption force on the side opposite to the optical marker) is pressed against the surface of the space debris C, such that the surface of the plate-like body is able to be adsorbed onto the surface of the space debris C and the plate-like body is able to be attached to the space debris C.

In the debris removal system 1 according to the above embodiment, the cooperative interface M is able to be attached to the surface of the space debris C by the first spacecraft S configured to move in the outer space. Therefore, the second spacecraft R is able to easily approach the space debris C using the cooperative interface M, capture the space debris C, and enter the atmosphere together with the space debris C (or release the space debris C at the low altitude), thereby realizing debris removal. Therefore, it is possible to eliminate a complicated function or a high-precision control necessary when the second spacecraft R approaches the space debris C or the like for removing the debris, and it is easy to perform the debris removal operation. As a result, it is possible to realize a reduction of the cost required for debris removal and to provide a debris removal service more safely.

In addition, since various design margins necessary to ensure safety are able to be kept to a minimum, it is also possible to realize reduction of the cost required for debris removal.

It should be noted that the configurations of the first spacecraft and the cooperative interface are not limited to the configurations described in the present embodiment. For example, as the cooperative interface, an approach marker that is applied to the surface of the space debris C is able to be adopted, and a first spacecraft having a coating portion that applies the approach marker to the surface of the space debris C is able to also be adopted.

In addition, in the embodiment of Fig. 1, an example is shown in which the cooperative interface M is attached to the "single" space debris C using the single first spacecraft S, and the space debris C is removed, but the single first spacecraft S is also able to remove a "plurality" of space debris C.

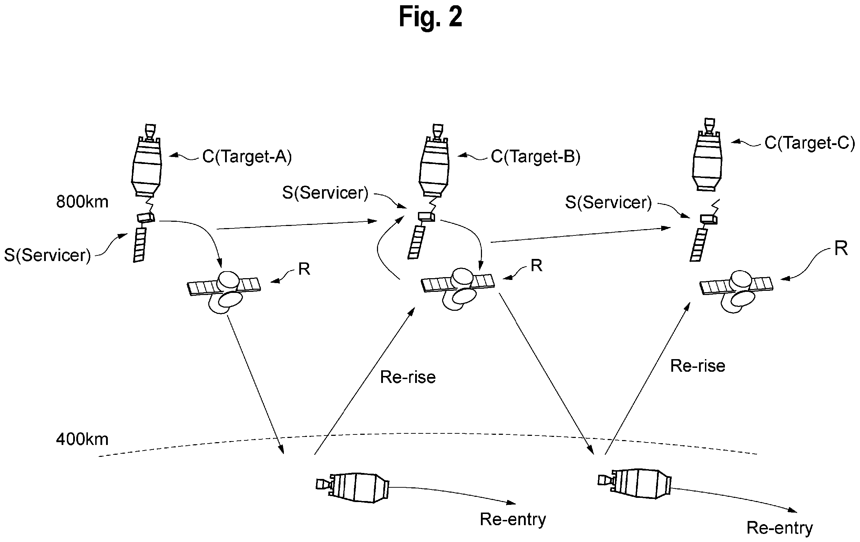

That is, as shown in Fig. 2, for example, a single Servicer (first spacecraft S) that travels on an earth low orbit at an altitude of 400 km is caused to approach a Target-A (first space debris C) that is on an orbit at an altitude of 800 km, and the cooperative interface M is attached to the Target-A. Thereafter, the single Servicer is caused to approach a Target-B (second space debris C) that is on a different orbit or the same orbit, and the cooperative interface M is attached to the Target-B. Then, the single Servicer is caused to approach a Target-C (third space debris C) that is on a different orbit or the same orbit, and the cooperative interface M is attached to the Target-C.

The "plurality" of space debris C (Target-A, Target-B, and Target-C) to which the cooperative interface M is attached by the single first spacecraft S (Servicer) are able to be processed by a separate or same service satellite (second spacecraft R). For example, as shown in Fig. 2, the service satellite (second spacecraft R) for removing the "plurality" of debris is able to approach each of the "plurality" of space debris C using the cooperative interface M. Then, the service satellite (second spacecraft R) is able to capture each of the "plurality of" space debris C and enter (re-entry) the atmosphere together with the "plurality of" space debris C (or release the space debris C at the low altitude) to perform debris removal.

### <Second Embodiment>

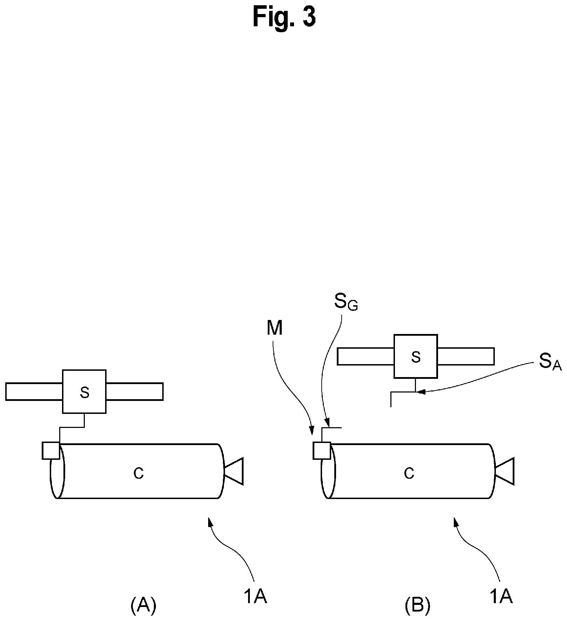

Next, a configuration of a debris removal system 1A according to a second embodiment of the present invention will be described with reference to Fig. 3. The present system 1A is a system that removes the space debris C existing in the outer space, similarly to the first embodiment, and includes a first spacecraft S and a second spacecraft R configured to move in the outer space, and a cooperative interface M attached to a surface of the space debris C by the first spacecraft S. Since the second spacecraft R in the present embodiment is substantially the same as that in the first embodiment, the illustration and the detailed description thereof will be eliminated.

The first spacecraft S according to the present embodiment has a robot arm SA and a grip mechanism SG provided at a distal end of the robot arm SA. The grip mechanism SG is configured to attach the cooperative interface M, to grip the space debris C, and to be separated from the robot arm SA together with the cooperative interface M. The configuration of the grip mechanism SG is not particularly limited as long as the grip mechanism SG is able to perform such functions.

In addition, various devices, such as a docking interface, an angular velocity detumbling device, a drag sail device, and a tether device for orbit descent, are able to be attached to the grip mechanism SG together with the cooperative interface M.

In this way, the space debris C is gripped by the grip mechanism SG, and the grip mechanism SG is separated from the robot arm SA together with the device, such that the device and the space debris C are able to be integrated.

A method of removing the space debris C using the present system 1A (debris removal method) includes a step (attachment step) of attaching the cooperative interface M to the surface of the space debris C by the first spacecraft S configured to move in the outer space, a step (capture step) of causing the second spacecraft R to approach the space debris C using the cooperative interface M and capturing the space debris C by the second spacecraft R, and a step (re-entry step) of causing the second spacecraft R to enter the atmosphere together with the space debris C. Instead of the re-entry step, as in the first embodiment, a release step of releasing the space debris C captured in the capture step at the low altitude is able to also be adopted.

In the present embodiment, the cooperative interface M is attached to the grip mechanism SG of the robot arm SA of the spacecraft S, the space debris C is gripped by the grip mechanism SG, and the grip mechanism SG is separated from the robot arm SA together with the cooperative interface M, such that the cooperative interface M is able to be attached to the space debris C.

The same operations and effects as those of the first embodiment are able to be obtained in the debris removal system 1A according to the above-described embodiment.

The present invention is not limited to each of the above-described embodiments, and those embodiments which are appropriately modified by a person skilled in the art are also within the scope of the present invention as long as the modifications have the features of the present invention. In other words, each element, a disposition thereof, material, a condition, a shape, a size, and the like included in each of the above-described embodiments are not limited to those exemplified, and are able to be appropriately changed. In addition, each element included in each of the above-described embodiments is able to be combined as much as technically possible, and the combination of the elements is also included in the scope of the present invention as long as the features of the present invention are included.

### Reference Signs List

1, 1A debris removal system
C space debris
M cooperative interface
S first spacecraft
SA robot arm
SG grip mechanism
R second spacecraft

## Claims

1. A debris removal system that removes space debris existing in an outer space, the debris removal system comprising:
first and second spacecrafts configured to move in the outer space; and
a cooperative interface attached to a surface of the space debris by the first spacecraft,
wherein the second spacecraft is configured to approach the space debris using the cooperative interface, capture the space debris, and enter the atmosphere together with the space debris.

2. A debris removal system that removes space debris existing in an outer space, the debris removal system comprising:
first and second spacecrafts configured to move in the outer space; and
a cooperative interface attached to a surface of the space debris by the first spacecraft,
wherein the second spacecraft is configured to approach the space debris using the cooperative interface, capture the space debris, and release the space debris at a low altitude.

3. The debris removal system according to claim 1 or 2, wherein the cooperative interface is a plate-like body having an optical marker configured to reflect light.

4. The debris removal system according to claim 3, wherein a surface of the plate-like body has an adsorption force,
wherein the first spacecraft has a grip portion configured to grip the plate-like body, and
wherein the surface of the plate-like body gripped by the grip portion is pressed against the surface of the space debris so that the surface of the plate-like body is adsorbed onto the surface of the space debris, and the plate-like body is attached to the space debris.

5. The debris removal system according to claim 4, wherein the surface of the plate-like body has the adsorption force by using Adhesive Textile, Gecko, Velcro, and/or Coldwelding.

6. The debris removal system according to claim 1 or 2, wherein the first spacecraft has a coating portion that applies an approach marker as the cooperative interface to the surface of the space debris.

7. The debris removal system according to claim 1 or 2, wherein the first spacecraft has a robot arm and a grip mechanism provided at a distal end of the robot arm, and
wherein the grip mechanism is configured to attach the cooperative interface, to grip the space debris, and to be separated from the robot arm together with the cooperative interface.

8. A debris removal method of removing space debris existing in an outer space, the debris removal method comprising:
an attachment step of attaching a cooperative interface to a surface of the space debris by a first spacecraft configured to move in the outer space;
a capture step of causing a second spacecraft to approach the space debris using the cooperative interface and capturing the space debris by the second spacecraft; and
a re-entry step of causing the second spacecraft to enter the atmosphere together with the space debris.

9. A debris removal method of removing space debris existing in an outer space, the debris removal method comprising:
an attachment step of attaching a cooperative interface to a surface of the space debris by a first spacecraft configured to move in the outer space;
a capture step of causing a second spacecraft to approach the space debris using the cooperative interface and capturing the space debris by the second spacecraft; and
a release step of releasing the space debris captured in the capture step at a low altitude.
